Europäisches Patentamt

European Patent Office

Office européen des brevets

(11) Publication number: **0 507 946 A1**

## EUROPEAN PATENT APPLICATION
### published in accordance with Art. 158(3) EPC

(21) Application number: 91900925.8

(22) Date of filing: 25.12.90

(86) International application number:
PCT/JP90/01686

(87) International publication number:
WO 91/10186 (11.07.91 91/15)

(51) Int. Cl.⁵: G06F 7/38

(30) Priority: 28.12.89 JP 344119/89

(43) Date of publication of application:
14.10.92 Bulletin 92/42

(84) Designated Contracting States:
CH DE FR GB IT LI NL SE

(71) Applicant: WATARI, Syuzi
3-37-205 Simorenzyaku 9-chome
Mitaka-shi, Tokyo 181(JP)
Applicant: WATARI, Masao
6-15-A202, Kurikidai 2-chome, Asao-ku
Kawasaki-shi, Kanagawa 215(JP)

(72) Inventor: WATARI, Syuzi
3-37-205 Simorenzyaku 9-chome
Mitaka-shi, Tokyo 181(JP)
Inventor: WATARI, Masao
6-15-A202, Kurikidai 2-chome, Asao-ku
Kawasaki-shi, Kanagawa 215(JP)

(74) Representative: Patentanwälte Grünecker,
Kinkeldey, Stockmair & Partner
Maximilianstrasse 58
W-8000 München 22(DE)

(54) HIGH SPEED OPERATION SYSTEM.

(57) A high speed operation system intended for data closed for operations such as floating-point data in which a desired final operational result is obtained by converting the data to the one for which an arithmetic and logic unit (ALU) can be simplified (the number of elements and gate delay time, etc., are reduced) with an encoder $\Phi$, by executing a series of operations for the encoded data, and by restoring the obtained result to the original data representation with a decoder, $\Psi$. The encoding is defined by mappings which correspond completely to the respective ones of the ALU for the original data representation (the ALU for the original operation system), the encoder $\Phi$, the decoder $\Psi$, and the ALU for the encoded data (the ALU for the new operation system). Therefore, the encoding such that the ALU of the new operation system can be simplified can be determined by, for example, utilizing a computer.

FIG. 1

TECHNICAL FIELD

This invention relates to a high-speed arithmetic operation algorithm, or more specifically, to one which makes it possibleto performfloating-point arithmetic and other operations at high speeds based on a quite novel encording principle.

BACKGROUND ART

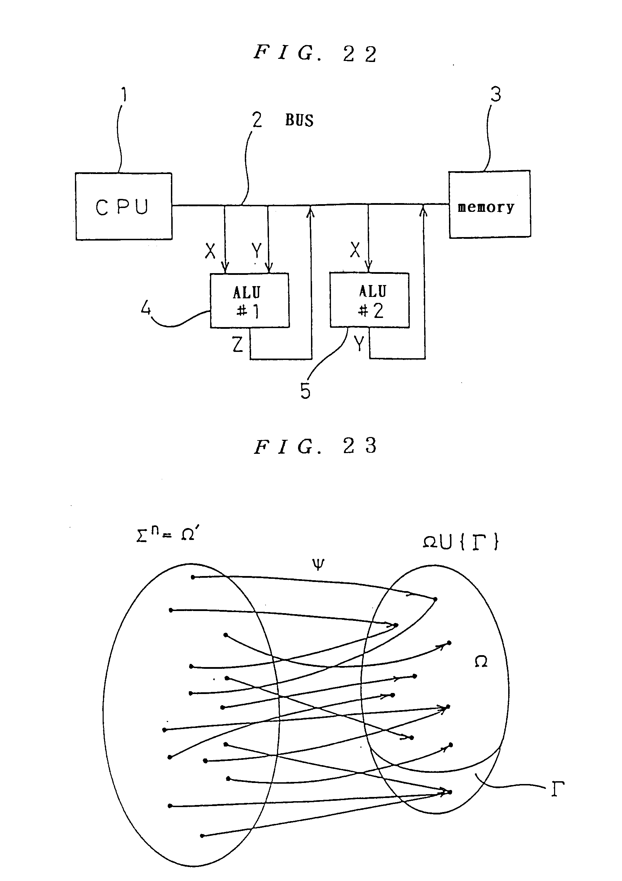

Figure. 22 shows the conceptual configuration of a conventional operation algorithm. Memory 3 and Arithmetic and Logical Units 4 and 5 ( ALUs 4 and 5 ) are connected to Bus 2 which is connected to Central Processing Unit 1 (CPU 1 ). The first ALU 4 performs a binomial operation on the data X and Y read from Memory 3 under the control of CPU 1 and stores the result in Memory 3 back again. On the other hand, the second ALU 5 performs a monomial operation on the data X read from Memory 3 and stores the result in Memory 3. That is, there are many instances of conventional operation algorithms in which operations are directly applied to the data read from Memory 3.

Efforts have been made with the purpose of attaining faster numeric and other operations of computers so far and they are broadly divided into five approaches as follows:
① Development of devices having faster switching speeds.
② Development of microstructure fabrication technology for faster switching speeds and higher packing densities
③ Development of fast processing architectures
④ Optimum logic design of ALUs
⑤ Improvements in packaging technology such as reduction in length of interconnections and cooling techniques.

Of these five approaches, the first and second involve a vast investment in research and development and the third and fifth have a fair likelihood to incur an increase in cost. There are not a few problems in them in implementing a high speed computer having a low cost to-performance ratio.

On the contrary, Approach 4 is a purely theoretical one, which is the best as to the ratio of return on investment and causes no anxicty about an increase in cost if cleverly conceived. However, theories such as the one on the complexity of combinational circuits point out that this approach has already come up nearly to its limit as well.

In the case of a multiplier for two n bit binary numbers, for example, it is known that, even if the logic is optimally designed, the critical path will have gate stages of the order of magnitude of O (log n) and contain elements of the order of magnitude of the polynomial of n ( Hiroto Yasuura " Theory on the Complexity of Logic Circuits " Johoshori Gakkaishi (Proceedings of the Information Processing Society of Japan), Vol. 26, No. 6, pp. 575-582 (June 1985)), where O (log n) denotes the order of magnitude of log n (the same shall apply hereafter).

And, such multipliers have already been contrived, such as one which uses a redundant binary representation ( Naoshi Takagi " High speed Multiplier for VLSIs using Redundant Binary Adders " Shingakuron D (Papers of the Institute of Electronics and Communication Engineers Japan), J66-D, 6, pp. 683-690 (June 1983)) and another one with parallel counters whose number of gate stages is O (log n) and whose number of elements is O (n squared). The former one, which is a fixed-point multiplier using a redundant binary repuresentation, is incorporated in a floating point multiplier as its multiplier portion for mantissa and is implemented on an LSI ( H. Edamatsu et al. : " A 33 MFLOPS Floating-Point Processor Using Redundant Binary Representation " ISSCC 88, pp. 152-153 ).

This approach to the optimum design of ALUs has nearly attained the optimum level as to the order of magnitude of the both numbers of gate stages and elements, not only in multipliers but also in adders and subtracters. It is thougththat no great improvements can be expected of this approach.

A challenge to the logic design of an ALU is the problem of, for the number representation given for the first place ( for example, a binary number represented in a two's complement), how to implement on a logic circuit the already established input output relations (truth table ) of that ALU. As to a fixed point muliplier and other curcuits using a redundant binary representation, an efficient circuit has been implemented by using a redundant binary representation as the internal representation of the logic circuit. However, such acontrivance in the internal representation of a logic circuit is thought to have nearly reached its limit.

Instead of the internal representation of a logic circuit, a method called residue operation method or arithmetic conversion method is known as a course toward contriving the number representation itself (Suguru Arimoto " Processing of Digital Image Signal " Sangyo-tosho Publication ).

There are several prototypes of hardware using this residue operation method (residue number system: abbreviated to RNS hereafter) (Jun Kiuchi et al., " FIR Digital Filter f orMoving Image Processing Using Residue Operation Method " Singakuron (D), J-67D 4, pp. 536-543 (April, 1984)). Instead of executing floating point sum-of-producuts and other operations, these pieces of hardware convert once floating point binary data, coefficients and others through a binary-to-RNS encorder into multiple sets of residues regarding to a set of relatively prime moduli and execute the sum-of-products and other operations on each of these sets of residues independently. The set of residues that is the result of the series of operations is converted, through an RNS-to-binary decoder using the Chinese remainder theorem, to obtain the desired final result.

The reason why this can attain a higher operation speed than executing the sum-of-product operation in the original binary representation untouched is that, because the number of bits necessary to represent each residue is greatly smaller than the number of bits of the binary number, the ALU for eachmodulus can be implemented in a compact manner ( with less stages and less elements).

As a structurally similar method, a signal processor has been developed in which the final result of a sum-of-products operation can be calculated at a high speed insuch a way that redundant binary multiplications are performed after the data are passed through a binary-to-redundant-binary converter, and the multiple multiplication results are accumulated in their redundant representation untouched, and the accumulation result represented in redundant binary numbers is passed through a redundant-binary-to-binary converter ( T. Enomoto et al., " 200 MHz 16 bit Bi-CMOS SignalProcessor " ISSCC '89, Digest of THPM 12. 8, Feb., 1989 )

The concept common to the two approaches above is that the fixed point data are once converted into data in such a representation that allows high-speed operations, and a series of processing such as sum-of-products operations are performed in this representation untouched, and the final result is changed back to fixed-point data. For the former approach, the Chinese remainder theorem which holds for integers, while for the latter, the redundant binary representation proposed by Arizienis ( A. Arizienis: "Signed digit number representation for fast parallel arithmetic IRE Trans. Elec. Comp., EC 10, 3, pp. 389-400 (Sept. 1961)) assures high-speed operations and reversible conversion of the original data.

As above, a high-speed operation algorithm has been contrived for fixed-point data, with the concept of encoding into a set of residues or a redundant representation, a series of operations on the encoded data, and decoding the result to fixed point data. However, this has a problem that the operations are limited to addition, subtraction and multiplication and, above all things, has another problem that this can not be applied to floating-point and other data than fixed point data.

Neverthless, as long as fixed-point data are concerned, their encoding has been found effective in high speed operations, especially, redundant encoding is so in high speed design of ALUs as well.

Therefore, several encoding schemes have also examined for other data than fixed-point data (for example, Yasuura, Takagi and Yajima " On a High speed Parallel Algorithm Using Redundant Encoding " Shingakuron (D), J70 D, 3, pp. 525-533 (1987-03), called Literature 1 hereafter).

In Literature 1, redundant encoding and local computability are defined in a general form. According to this the definitions are as follows: Redundant encoding

Let $\Omega$ be a finite set. The number of elements in $\Omega$ is denoted by $|\Omega|$. Let $\Sigma$ be a finite set of the symbols used for encoding. $\Sigma^n$ denotes the set of all the sequences on $\Sigma$ having a length of $n$. An element of $\Omega$ is encoded with a sequence of $\Sigma^n$ with the representation of $\Omega$ untouched. Here, we consider the codes of an equal length only and assume $|\Omega| > 1$.

[ Definition 1 ] The mapping $\Psi$ is called an encoding on $\Sigma$ for $\Omega$ having a code length of $n$, if the two conditions below are satisfied:

⟨1⟩ $\Psi : \Sigma^n \rightarrow \Omega \cup \{ \Gamma \}$ with $\Gamma \notin \Omega$, where the symbol $\cup$ denotes the union of the sets.

⟨2⟩ For any element $X$ in $\Omega$, there is at least one element $X'$ in $\Sigma^n$ such that $\Psi (X') = X$. In this case, $X'$ is called a code of $X$.

Because the mapping $\Psi$ for encoding is defined as a mapping from code space $\Sigma^n$ onto the union of the original set $\Omega$ and $\{ \Gamma \}$, redundant encoding is possible. When more than one element in $\Omega$ has two or more codes, this encoding is called redundant. Figure 23 shows the mapping from the code space $\Sigma^n$ onto the union of the original set $\Omega$ and $\{ \Gamma \}$.

Here, we define the efficiency of the encoding $\Psi$ as the ratio of the minimum code length necessary for encoding on $\Sigma$ to the code length of $\Psi$:

$$[ \log | \Sigma \| \Omega | ] / n$$

Let $\bullet$ be a binomial operation on $\Omega$ and $\Omega$ be closed regarding to the operation $\bullet$. For the operation $\bullet$, a binomial operation $*$ can be defined on $\Sigma^n$ as follows:

$$\Psi (X' * Y') = \Psi (X') \bullet \Psi (Y') \qquad ≪1≫$$

where $\Psi (X')$ and $\Psi (Y') \in \Omega$.

That is, $(\Omega, \bullet)$ is homomorphic to $( \{X' \mid X' \in \Sigma^n$ and $\Psi (X') \in \Omega\} , *)$ . $*$ can be defined by the function $F : \Sigma^{2n} \rightarrow \Sigma^n$.

If the encording $\Psi$ is redundant, this function is not determined uniquely. That is, because there are multiple candidates for $X' * Y'$ that satisfy Expression ≪1≫ , we have freedom in the selection of F which defines the operation $*$. We can take advantage of this freedom in selecting a function F which allows fast calculation, and thus attain a high calculation speed of *, and eventually, of ●.

Let F = ( $f_1$, $f_2$, ...., $f_m$) be a mapping from $\Sigma^n$ to $\Sigma^m$ and $f_i : \Sigma^n \to \Sigma^m$ be a subfunction for each element of the output of F. The function F is called *k*-locally computable if each subfunction $f_i$ (i = 1,2, ..., *m)* is dependent on at most *k* input variables. We use this local computability to define the local computability of a binomial operation on a finite set. [Definition 2] Let ● be a binomial operation on a finite set $\Omega$ and $\Psi$ be an encoding of $\Omega$ on $\Sigma$ having a code length of *n*. ● is called *k*-locally computable under the encoding $\Psi$ if there is such a function F : $\Sigma^{2n} \to \Sigma^n$ that defines a binomial operation * for the operation ● on the code space and that is *k*-locally computable.

The above is the definitions given in Literature 1. In this literature, redundant encoding and local computability under these definitions are shown specifically for addition on a residue class and for an operation on a fi nite commutative group. In addition, an example is given in which both addition and multiplication are made faster at the same time for the residue class ring of an integer.

However, these specific examples of encoding in accordance with the definition of redundant encoding are all hold only for sets having a mathematically simple algebraic structure ( residue class, finite commutative group, residue -class ring of an integer and the like ). No methods are given for, for example, a set of floating point data or other general sets for which no direct correspondence can be established between the operation in question and a group, ring or another mathematical algebra.

After all, it can be said that no methods have not been contrived to attain high-speed operations on floating point and other data, which have great practical importance, using a novel encoding scheme.

Therefore, this invention was made in consideration of such a challenge and aims at identifying the relation between any set closed regarding to one or more monomial and binomial operations defined and an encoder, decoder and novel ALU which can execute these operations at high speeds and embodying the relation in a high-speed computer or other calculating means.

DISCLOSURE OF INVENTION

This invention relates to an arithmetic operation system which, for one or more arbitrary defined operations (binomial and monomial operations) and for a computer or computing system to operate the data belonging to an arbitrary finite set operationally closed regarding to these operations (this data is called data for the original operation algorithm, and the operation algorithm of this computing system is called the original operation algorithm hereafter), produces the necessary operation result not by executing these operations directly through an ALU as in the original operation algorithm but by converting the data once through an encoder into data for a new operation algorithm satisfying certain conditions, executing a series of operations on the converted data through an ALU for the new algorithm, and changing the obtained result back into data for the original algorithm through a decoder, and consists of such an encoder and decoder and ALUs for the new algorithm determined by an encoding scheme which assures two-way conversion between data for the original algorithm and data for the new algorithm and assures to produce the same result as the operation result obtained by the original algorithm.

The contents of this invention are described below in more detail, including theoretical clarification of the encoding scheme.

With P binomial operations $A_p : \Omega \times \Omega \to \Omega$ (p = 1,2, ••••, P) and Q monomial operations $B_q : \Omega \to \Omega$ (q = 1,2, ••• •, Q) defined, we consider a finite set $\Omega$ closed regarding to these operations and call the combination of the set $\Omega$ and the operations $A_p$ and $B_q$, ($\Omega$, $A_p$, $B_q$) , the original operation system. This is something like, for example, a set of floating-point data and a floating-point ALU.

Then, we try to make a configuration in which we obtain the operation result on the set $\Omega$ we originally intend to calculate, by once converting the data on the set $\Omega$ into data on a finite set $\Omega'$ through an encorder $\Phi : \Omega \to \Omega'$, executing the operations on $\Omega'$, $A'_p : \Omega' \times \Omega' \to \Omega'$ and $B'_q : \Omega' \to \Omega'$ corresponding to the operations $A_p$ and $B_q$, and by converting the obtained result through a decoder $\Psi : \Omega' \to \Omega$, instead of executing the operations $A_p$ and $B_q$ of the original operation system.

We call the combination of the finite set $\Omega'$ and operations $A'_p$ and $B'_q$ and the encoder $\Phi$ and decoder $\Psi$, ($\Omega'$, $A'_p$, $B'_q$, $\Phi$, $\Psi$) , the new operation system. Here, placing the conditions of four Expressions (2) through (5) below between the new operation system ($\Omega'$, $A'_p$, $B'_q$, $\Phi$, $\Psi$) and the original operation system ($\Omega$, $A_p$, $B_q$) assures the two way conversion of data and the equality of the two operation results, that is, the result of a series of the encoding by $\Phi$, the operations by $A'_p$ and $B'_q$ and the decoding by $\Psi$ is assured to agree with the one obtained by the original operation system.

For an arbitrary element *X* on $\Omega$, let [*X*]be such a subset on $\Omega'$ that satisfies the following four expressions. Here we call the family of sets $\{[X]\}_{x \in \Omega}$ the codes of the set $\Omega$ on the set $\Omega'$.

We place the following conditions between the codes and the new operation system ($\Omega'$, $A'_p$, $B'_q$, $\Phi$, $\Psi$) : For any *X* such that $X \in \Omega$,

$$\Phi(X) \in [X] \subset \Omega' \quad (2)$$

For any $X$ such that $X \in \Omega$,

$$\Psi([X]) = X \in \Omega \quad (3)$$

For any $X$ and $Y$ such that $X$ and $Y \in \Omega$ and any p such that $p \in \{1,2,\bullet\bullet\bullet\bullet, P\}$ with $Z \in \Omega$,

$$Z = A_p(X, Y) \Leftrightarrow [Z] \supset A'_p([X], [Y]) \quad (4)$$

For any $X$ such that $X \in \Omega$ and any q such that $q \in \{1,2,\bullet\bullet\bullet\bullet, Q\}$ with $Y \in \Omega$,

$$Y = B_q(X) \Leftrightarrow [Y] \supset B'_q([X]) \quad (5)$$

where $\Phi(X) \in [X]$ denotes that $\Phi(X)$ is an element of the subset $[X]$ of $\Omega'$, $\Leftrightarrow$ does equivalence, and $\Psi([X])$ and the like do the images by the mapping $\Psi$ of the set $[X]$. In Expression (5), for example, the right side of the symbol $\Leftrightarrow$, $[Y] \supset B'_q([X])$, is identical with the proposition that $B'_q(X') \in [Y]$ for any $X'$ such that $X' \in [X]$.

Expression (2) above shows the relation in the encoding, Expression (3) the relation in the decoding, Expression (4) the relation between the new and original operations and the codes in the binomial operations, and Expression (5) the relation between the new and original operations and the codes in the monomial operations, respectively.

From Expression (3),

$$[X] \neq \varnothing \quad (6)$$

holds for any $X$ such that $X \in \Omega$, and

$$X \neq Y \Leftrightarrow [X] \cap [Y] = \varnothing \quad (7)$$

holds for any $X$ and $Y$ such that $X$ and $Y \in \Omega$, where $\varnothing$ means the empty set.

Expression (6) can be proven in such a manner that, if $[X] = \varnothing$, then $\Psi([X]) = \Psi(\varnothing) = \varnothing$ and this contradicts with Expression (3). Expression (7) can also be proven likewise. If $[X] \cap [Y] \neq \varnothing$, then there is $Z'$ such that $Z' \in [X]$ and $Z' \in [Y]$, therefore, from Expression (3), $X = \Psi([X]) \supset \Psi(Z') \subset \Psi([Y]) = Y$, that is, $X = Y$ and this is contradictory.

From Expressions (6) and (7) (that is, Expression (3)) and Expression (2), it is obvious that $|\Omega'| \geqq |\Omega|$ must hold. And, $[X]$ will contain at least one element.

Then, we call the code $\{[X]\}_{X \in \Omega}$ a non-redundant code if $[X]$ consists of only one element for any $X$. Otherwise, we call it a redundant code. Let:

$$C = \cup_{X \in \Omega} [X], \quad N_c = \Omega' - C \quad (8)$$

then C is the universal set of codes and $N_c$ is the set of non-redundant codes.

The range of the mapping $\Psi$ of this invention is $\Omega$ and this differs from the range $\Omega \cup \{\Gamma\}$ of the mapping $\Psi$ of Literature 1. That is to say, the mapping $\Psi$ of this invention is a surjection onto the data set $\Omega$ of the original operation system while the mapping $\Psi$ of Literature 1 mentioned above is a surjection not onto $\Omega$ but onto $\Omega \cup \{\Gamma\}$.

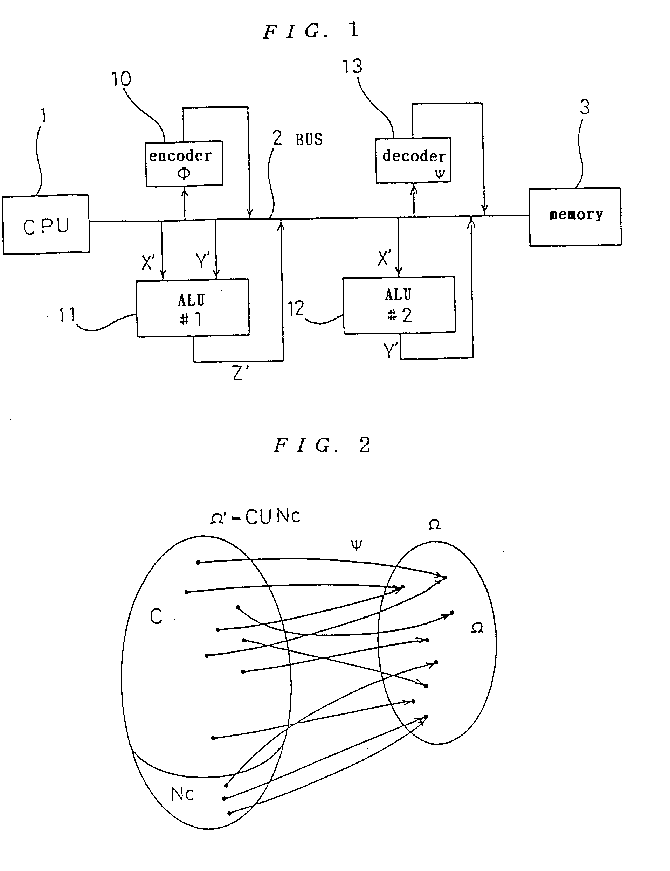

Figure 2 shows the relations among the mapping $\Psi$, domain $\Omega' = C \cup N_c$, and range $\Omega$ of this invention. this differs from the conventional mapping relations show in Figure 23.

As can be seen from Figure 2, the mapping $\Psi$ of this invention corresponds to a decoder completely.

In addition, because Expression (2) through (5) are defining expressions independent of whether the code $\{[X]\}_{X \in \Omega}$ is a redundant code or a non-redundunt code, the codes that are effective for the implementation of faster operations are not necessarily limited to redundant codes, and non-redundant codes are also options. In other words, every $\Phi$, $\Psi$, $A'_p$, $B'_q$, $\{[X]\}_{X \in \Omega}$ which satisfies Expressions (2) through (5) is an operation algorithm that can bring about the same operation result as the original operation system.

There are in general an astronomical number of such new operation systems and codes. It is the essential concept of this invention that, by selecting among these operation systems and codes the one which is desirable on specific evaluation criteria such as increase in operation and encoding efficiency, we determine a practical encoder, decoder and ALUs for high-speed operations and construct a definite computing system.

As to the degree of freedom in the selection described here, in the case of $\Omega = B^n$ and $|\Omega'| = |\Omega|$ (the code is non-redundant) with $B = \{0, 1\}$, the options amount to a huge number of $2^n!$ because $\Phi$ is the permutation of $2^n$ elements and $\Psi$ can be regarded as the inverse conversion of $\Phi$. And, it is matter of course that there are more degrees of freedom in the case of $|\Omega'| > |\Omega|$.

As above, the freedom in selection described in this invention differs in quality as well from the freedom in selection described in Literature 1 above and its degree is far larger. This is obvious from Literature 1, which reads " If the encoding $\Psi$ is redundant, then F is not determined uniquely. That is, because there are multiple candidates for $X' * Y'$ which satisfies Expression (1), there is freedom in the selection of the function F which defines the operation *. We use this freedom to select such F that allows high-speed calculation and thereby attain high-speed calculation of the operation *, and eventually of the operation ●." and this description leads to that Literature 1 uses the freedom in determining an ALU for a given redundant encoding and this freedom arises because the encoding is redundant.

Besides this great increase in the degree of freedom in selection, Literature 1 has another drawback that, because $\Psi$ is a mapping onto the union of $\Omega$ and an indefinite set $\{\Gamma\}$, it is impossible for $\Psi$ to establish a direct correspondence to a decoder.

In this point, $\Psi$ of this invention always corresponds to a decoder and has an advantage in allowing a definite circuit design to be made.

BRIEF DESCRIPTION OF DRAWINGS

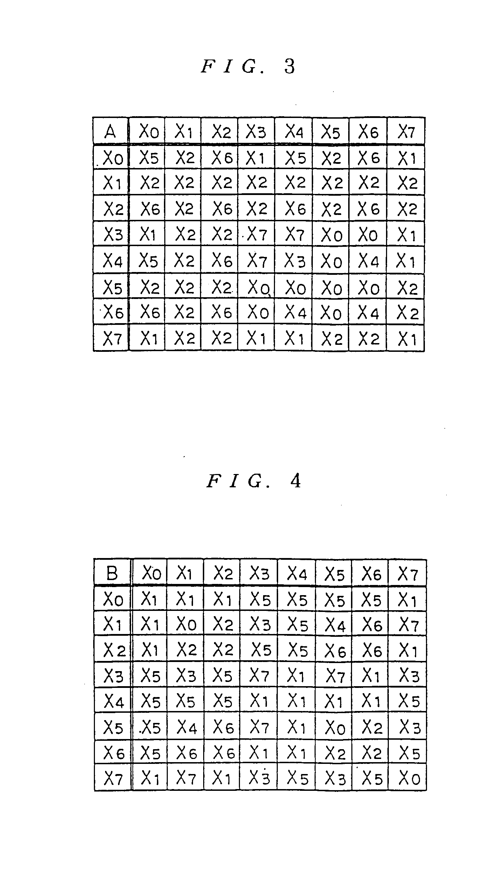

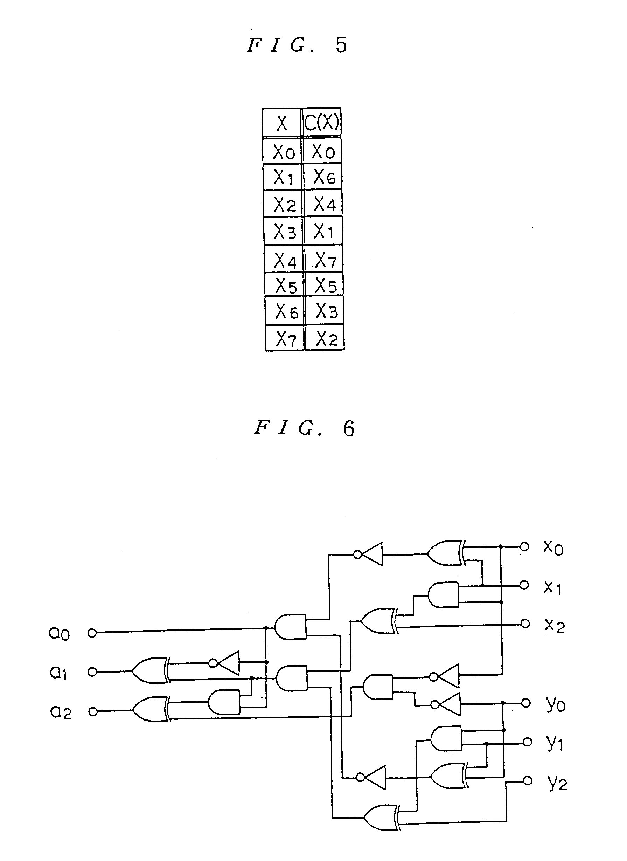

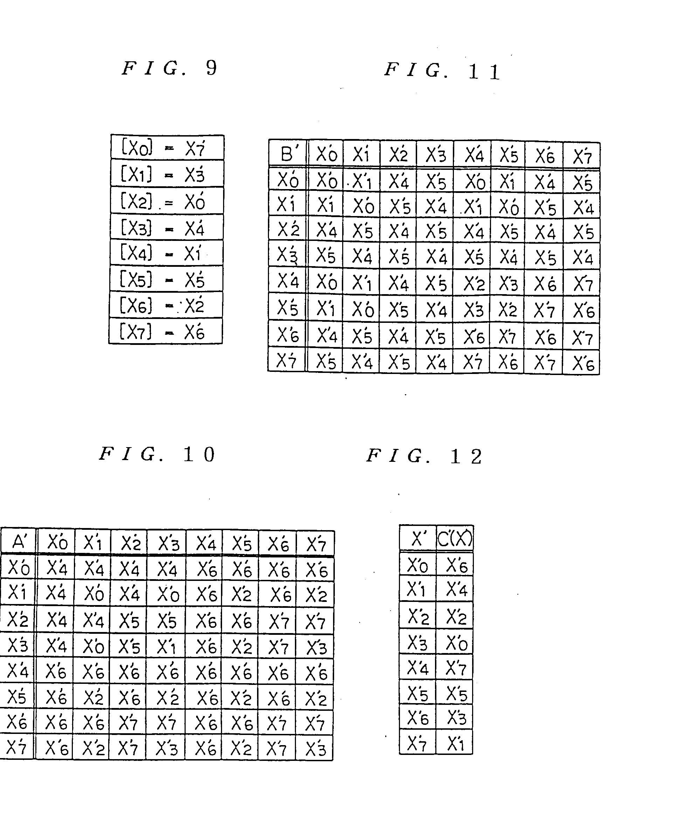

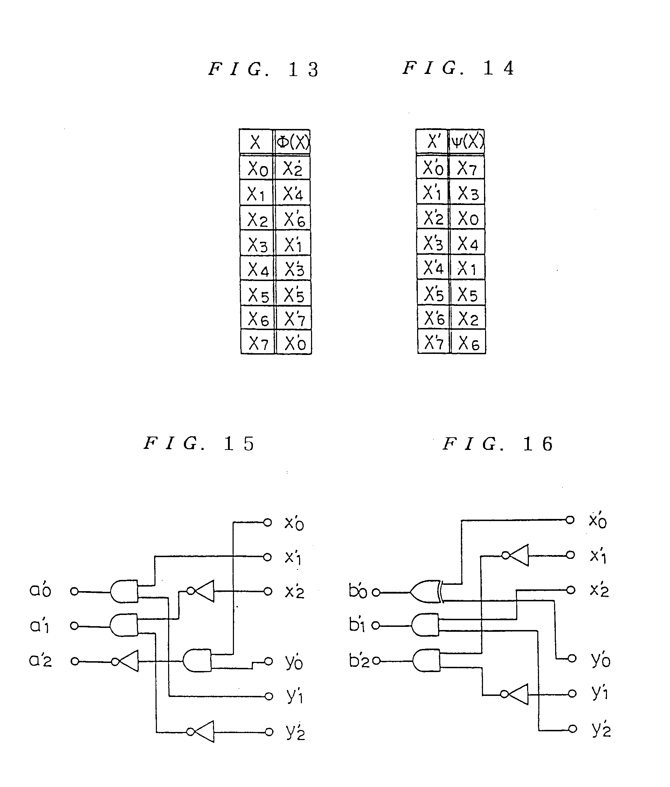

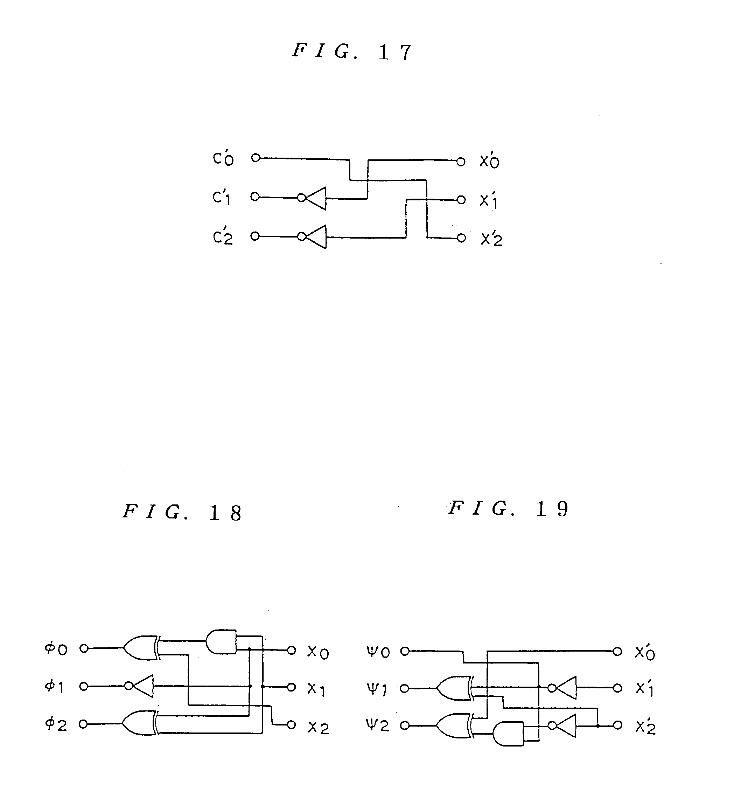

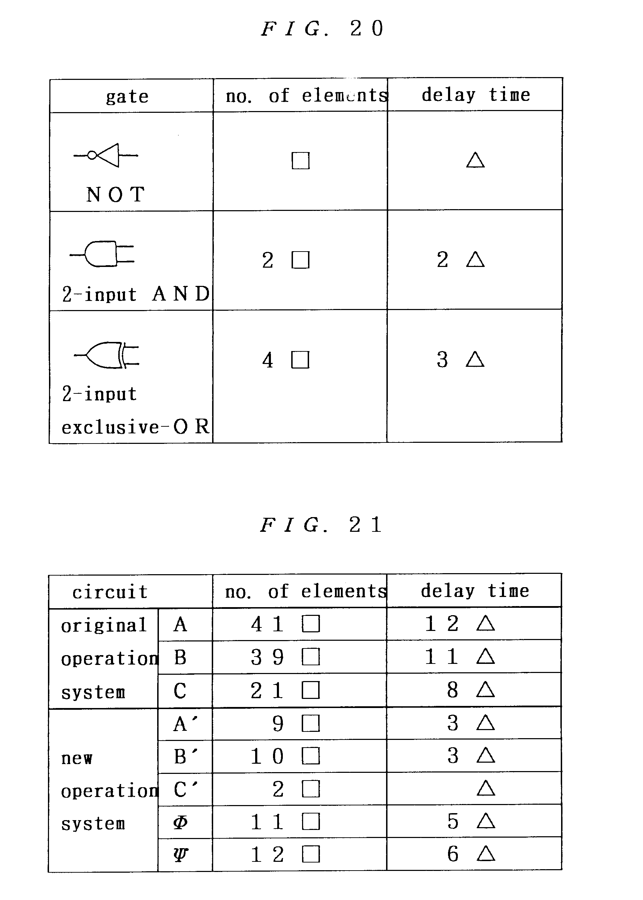

Figure 1 is a block diagram showing the relations among a desirable encoder, decoder, ALU, and CPU according to this invention, Figure 2 shows the relations among a mapping $\Psi$, domain $\Omega'$ = $C \cup N_c$ and range $\Omega$, Figures 3 to 5 represent the respective operation rules for the binomial operations A and B and the monomial operation C in a definite implementation of the original operation system, Figures 6 to 8 are respective circuit diagrams of the ALUs A, B, and C in the original operation system, Figure 9 shows the codes of a new operation system as an embodiment of this invention, Figures 10 to 12 represent the operation rules for the binomial operations A' and B' and the monomial operation C' in the new operation system, which correspond to the operations A, B and C in the original operation system respectively, Figure 13 shows the correspondence of the encoder in an embodiment of this invention, Figure 14 does the correspondence of the decoder in the embodiment, Figures 15 through 19 are respective circuit diagrams of the binomial operations A' and B' and monomial operation C' and the encoder $\Phi$ and decoder $\Psi$ in the new operation system in the embodiment, Figure 20 indicates the number of elements in each gate and its delay time, Figure 21 shows a comparison in the number of elements and delay time between a definite implementation of the original operation system and an embodiment of the new operation system, Figure 22 indicates the conceptual configuration of a typical, conventional operation algorithm, and Figure 23 shows the mapping $\Psi$ from a code space $\Sigma^n$ onto the union of the original set $\Omega$ and a set $\{\Gamma\}$, described in Literature 1.

In Figure 1:
1···CPU, 2···Data bus, 3···Memory, 10-···Encoder, 11 and 12···ALUs 13···Decoder

BEST FORM FOR IMPLEMENTATION OF THE INVENTION

We expound this invention in more detail, following the attached drawings.

Figure 1 is a block diagram showing the relations among a desirable encoder, decoder, ALU ( of the new operation system ), and CPU according to this invention and this is illustrated in a form corresponding to the typical, conventional operation algorithm (original operation system) represented in Figure 22. With the purpose of indicating the correspondence of operations between the new and original operation systems, the same numbering is applied to both operation systems: the binomial operation is numbered #1 and the monomial operation #2. In a computing system using a conventional operation algorithm as shown in Figure 22, the data on memory is sent into the ALU under the control of CPU 1 to obtain an operation result.

In a desirable operation algorithm according to this invention, on the other hand, the data on memory for the original operation system, for example, $X$ and $Y$ are first sent into the encoder $\Phi$ under the control of CPU 1 where they are respectively converted into data $X'$ and $Y'$ for the new operation system and stored on memory. Next, the data on memory for the new operation system are sent from the memory to the ALU of the new operation system under the control of CPU 1 and the operation result of the new operation system coming from the ALU is stored on memory. The intended series of operations ( for example, sum-of-products operation, vector operations, matrix operations and the like) are executed by a repetition of that operation by the new operation system. On completion of the definite operations, the final result is obtained on memory but in the representation of the new operation system. This data is sent into the decoder $\Psi$ under the control of CPU 1 to obtain the desired result in the representation of the original operation system.

In general, a far higher operation speed can be attained in the new operation system, shown in Figure 1 and used for the repeated operations, than in the original operation system shown in Figure 22. To explain this more specifically, an embodiment of this invention is given below.

Let $\Omega$ be a finite set consisting of eight elements,

or : $\Omega = \{X_0, X_1, X_2, \cdots\cdots, X_7\}$

On this $\Omega$, two binomial operations:

$A : \Omega \times \Omega \rightarrow \Omega$ , $B : \Omega \times \Omega \rightarrow \Omega$

and one monomial operation:

$C : \Omega \rightarrow \Omega$

are defined. The rules for these operations are shown in Figures 3 to 5, respectively. That is, Figures 3 and 4 show the operation rules for the binomial operations A and B, and Figure 5 shows the operation rule for the monomial operation C. In addition, let this $\Omega$ is encoded into three-element sequences of Boolean values {0. 1}, as follows:

$X_0 = \{0,0,0\}$ , $X_1 = \{0,0,1\}$ , $X_2 = \{0,1,0\}$ , $X_3 = \{0,1,1\}$
$X_4 = \{1,0,0\}$ , $X_5 = \{1,0,1\}$ , $X_6 = \{1,1,0\}$ , $X_7 = \{1,1,1\}$

Then, the binomial operations A and B can be represented in three Boolean functions of six variables, and the corresponding circuits can be implemented as combinational circuits with six inputs and three-outputs. In the same manner, the monomial operation C can be represented in three Boolean functions of three variables and the corresponding circuit can be implemented as a combinational circuit with three inputs and three outputs.

Let three Boolean functions:

$a_i : \{0,1\}^3 \times \{0,1\}^3 \rightarrow \{0.1\}$ ( i = 0,1,2)

represent the operation A, and we represent the Boolean value sequences of variables corresponding to the input of two elements of $\Omega$ by $(x_2, x_1, x_0)$ and $(y_2, y_1, y_0)$ r espectively, then:

$a_0 (x_2, x_1, x_0, y_2, y_1, y_0)$
$= 1 + x_0 + x_1 + y_0 + y_1 + x_0 y_0 + x_0 y_1 + x_1 y_0 + x_1 y_1$
$a_1 ( x_2, x_1, x_0, y_2, y_1, y_0)$
$= x_0 + x_1 + y_0 + y_1 + x_0 y_0 + x_0 y_1 + x_1 y_0 + x_1 y_1 + x_2 y_2$
$+ x_2 y_0 y_1 + x_0 x_1 y_2 + x_0 x_1 y_0 y_1$
$a_2 (x_2, x_1, x_0, y_2, y_1, y_0)$
$= 1 + x_0 + y_0 + x_0 y_0 + x_2 y_2 + x_2 y_0 y_1 + x_0 x_1 y_2$
$+ x_2 y_0 y_2 + x_0 x_2 y_2 + x_2 y_1 y_2 + x_1 x_2 y_2 + x_0 x_1 y_0 y_1$
$+ x_0 x_2 y_1 y_2 + x_1 x_2 y_0 y_2 + x_1 x_2 y_1 y_2 + x_0 x_2 y_0 y_1$
$+ x_0 x_1 y_0 y_2 + x_1 x_2 y_0 y_1 + x_0 x_1 y_1 y_2$

In a similar manner, let the operation B be three Boolean functions:

$b_i : \{0, 1\}^3 \times \{0, 1\}^3 \rightarrow \{0, 1\}$ ( i = 0, 1, 2)
$b_0 (x_2, x_1, x_0, y_2, y_1, y_0)$
$= 1 + x_0 y_0 + x_0 y_1 + x_1 y_0 + x_1 y_1$
$b_1 (x_2, x_1, x_0, y_2, y_1, y_0)$
$= x_0 y_1 + x_1 y_0 + x_1 y_1$
$b_2 (x_2, x_1, x_0, y_2, y_1, y_0)$
$= x_2 + y_2 + x_0 x_1 + y_0 y_1 + x_0 y_0 y_1$

$+ x_0 x_1 y_0 + x_0 x_1 y_0 y_1$

and the operation C be three Boolean functions. Then:

$c_i : \{0, 1\}^3 \rightarrow \{0, 1\}$ ( i = 0, 1, 2)
$c_0 (x_2, x_1, x_0) = x_2 + x_0 x_1$
$c_1 (x_2, x_1, x_0) = x_0 + x_2 + x_0 x_1$
$c_2 (x_2, x_1, x_0) = x_0 + x_1 + x_2 + x_0 x_2$

As above, these operations can be represented by logical expressions of Boolean rings ( they can of course be represe nted by Boolean lattices).

Now, we call the operation system ( $\Omega$, A, B, C ) given by such logical expressions the original operation system. Figures 6 to 8 show respective implementations of the operations A, B and C as combinational circuits consisting of two-input AND, two-input exclusive-OR and NOT gates and they all are circuits of the original operation system.

Concerning such an original operation system as above, we give here an example of non-redundant encoding as an encoding $\{[X]\}_{x \in \Omega}$ satisfying Expressions (2) through (5) . Figure 9 shows an example of codes so selected using a computer that, among the numerous ($2^3!$ in this case ) new operation systems ($\Omega'$, A', B', C', $\Phi$, $\Psi$) which satisfy Expressions (2) through (5) , the logical expressions corresponding to the operations A', B' and C' depends on the fewest possible variables. Here, let $\Omega'$ be a finite set consisting of eight elements as well, that is, $\Omega' = \{X'_0, X'_1, X'_2, \bullet\bullet\bullet\bullet\bullet\bullet, X'_7\}$ . In addition, let this $\Omega'$ be encoded into three-element sequences of Boolean values {0,1} in the same manner as $\Omega$, as follows:

$X'_0 = \{0, 0, 0\}$ , $X'_1 = \{0, 0, 1\}$ , $X'_2 = \{0, 1, 0\}$ , $X'_3 = \{0, 1, 1\}$
$X'_4 = \{1, 0, 0\}$ , $X'_5 = \{1, 0, 1\}$ , $X'_8 = \{1, 1, 0\}$ , $X'_7 = \{1, 1, 1\}$

Then, the operation rules for the operations A', B' and C' on $\Omega'$ :

A' : $\Omega' \times \Omega' \rightarrow \Omega'$, B' : $\Omega' \times \Omega' \rightarrow \Omega'$, C' : $\Omega' \rightarrow \Omega'$

are as shown in Figures 10 to 12, respectively.
The correspondence chart of the encoder $\Phi$ ( a truth table if translated into Boolean values ) corresponding to the codes shown in Figure 9 is as shown in Figure 13, and the correspondence chart of the decoder $\Psi$ is as shown in Figure 14.

In the same manner as A, B and C, A' and B' can be represented respectively by three Boolean functions of six variables, and C', $\Phi$ and $\Psi$ by as many Boolean functions of three variables. If we represent the variables being three-Boolean-value sequences on $\Omega'$ by $(x'_2, x'_1, x'_0)$ , $(y'_2, y'_1, y'_0)$ and

the like, and the Boolean functions of A' and B' for $i = 0, 1$ and $2$

by: $a'_i, b'_i : \{0, 1\}^3 \times \{0, 1\}^3 \to \{0, 1\}$

and the Boolean functions of C', $\Phi$ and $\Psi$ for $i = 0, 1$ and $2$ by: $c'_i, \phi_i, \psi_i : \{0, 1\}^3 \to \{0, 1\}$

they can be represented by logical expreions of Boolean rings, as follows, respectively:

$a'_0 (x'_2, x'_1, x'_0, y'_2, y'_1, y'_0) = x'_1 y'_1$

$a'_1 (x'_2, x'_1, x'_0, y'_2, y'_1, y'_0) = x'_2 + y'_2 + x'_2 y'_2$

$a'_2 (x'_2, x'_1, x'_0, y'_2, y'_1, y'_0) = 1 + x'_0 y'_0$

$b'_0 (x'_2, x'_1, x'_0, y'_2, y'_1, y'_0) = x'_0 + y'_0$

$b'_1 (x'_2, x'_1, x'_0, y'_2, y'_1, y'_0) = x'_2 y'_2$

$b'_2 (x'_2, x'_1, x'_0, y'_2, y'_1, y'_0) = x'_1 + y'_1 + x'_1 y'_1$

$c'_0 (x'_2, x'_1, x'_0) = x'_2$

$c'_1 (x'_2, x'_1, x'_0,) = 1 + x'_0$

$c'_2 (x'_2, x'_1, x'_0,) = 1 + x'_1$

$\phi_0 (x_2, x_1, x_0) = x_2 + x_0 x_1$

$\phi_1 (x_2, x_1, x_0) = 1 + x_0$

$\phi_2 (x_2, x_1, x_0) = x_0 + x_1$

$\psi_0 (x'_2, x'_1, x'_0) = 1 + x'_1$

$\psi_1 (x'_2, x'_1, x'_0,) = 1 + x'_1 + x'_2$

$\psi_2 (x'_2, x'_1, x'_0,) = 1 + x'_0 + x'_1 + x'_2 + x'_1 x'_2$

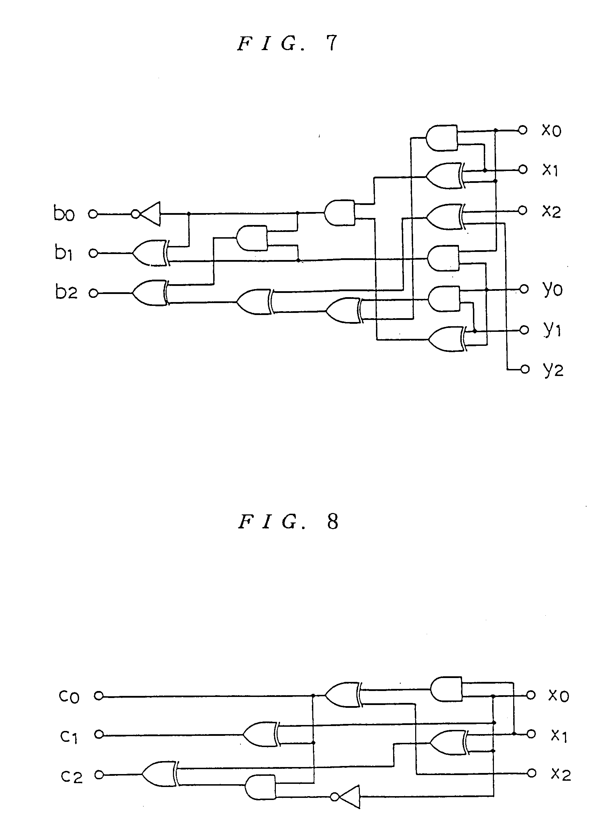

Figures 15 through 19 are respective implementations of the operations A', B' and C' and the encoder $\Phi$ and decoder $\Psi$ as combinational circuits consisting of two-input AND, two-input exclusive-OR and NOT gates. To make a comparison between an implementation of the new operation system ($\Omega'$, A', B', C', $\Phi$, $\Psi$) as these circuits and that of the original operation system as the circuits shown in Figure 7, 8 and 9, we derived the number of transistor elements ( simply called the number of elements hereafter ) and the delay time on the critical path ( simply called the delay time hereafter) in these circuits, based on the number of elements and delay time of AND, exclusive-OR and NOT gates.

Figure 20 shows the number of elements and delay time of the various gates, in units of □ being the number of elements, and △ being the delay time, of a NOT gate. From this Figure 20 and the various circuit diagrams, the number of elements and delay time were derived for each operation circuit in the original and new operation systems and are shown in Figure 21. As can be seen from this figure, the ALUs A', B' and C' in the new operation system are greatly reduced both in the number of elements and in the delay time in comparison with the ALUs A, B and C in the original operation system.

This means that, in the case of computing systems of von Neumann type having, for example, one unit of each of the three kinds of ALU above and executing the various operations on the same clock cycle, the ratio of clock cycle time is four to one between the original and new computing systems, namely, the new computing system has an arithmetic throughput four times as high as the original computing system ( on the assumption that the cycle time is determined by the slowest ALU ). As compared with the total number of elements of 101 □ in the original computing system, the total number of elements in the ALU, encoder and decoder of the new computing system is 44 □, namely, less than one half.

Next, in the case of computing systems of non-von Neumann type having N units of each of the three kinds of ALU and executing the operations completely in parallel, the ratio of cycle time is the same as the von Neumann type while the reduction rate in the number of elements is more remarkable. If we consider one encoder and one decoder to be sufficient in parallel computing systems regardless of the degree N of concurrency, the ratio of the number of elements between two systems approaches to the ratio of the number of elements in the ALUs of these systems (101 to 21) for an adequately large degree N of concurrency. That is, the total number of elements is reduced to about one fifth.

As above, it is possible to show definitely that, among the numerous new operation systems satisfying the four conditions of Expressions (2) to (5) for the three operations A, B and C operationally closed on $\Omega$, there are such systems that are effective for the purpose of increase in operation speed and reduction in the number of elements. Because every mapping $A_p$ and $B_q$ and $A'_p$, $B'_q$, $\Phi$ and $\Psi$ appearing in Expressions (2) to (5) defining a code according to this invention corresponds directly to a circuit, the definite circuit in this embodiment can be easily derived.

As described above, based on Expressions (2) to (5) which define a code according to this invention, we select $\Omega'$ of a new operation system ($\Omega'$, $A'_p$, $B'_q$, $\Phi$, $\Psi$) under the condition of $| \Omega' | \geq | \Omega |$ ( $|\Omega'| = | \Omega |$ in the embodiment described above ), select a code $\{[X]\}_{x \in \Omega}$ in succession, and select such $A'_p$ and $B'_q$ that satisfy our desired conditions under the conditions of Expressions (2) to (5) by using a computer or other means.

That is, there is freedom in selection in three stages: selection of $\Omega'$, selection of a code $\{[X]\}_{x \in \Omega}$ and selection of $A'_p$ and $B'_q$. And, by selecting satisfactory one, we can determine a new operation system which is improved at least over the original one both in the number of elements and in delay time. In the embodiment described above, we assumed $| \Omega' | = | \Omega |$ and obtained a non-redundant system as a result in which each $[X]$ has only one element (for any $X$ such that $X \in \Omega$ ). However, it can be easily understood that an effect equal to or better than the embodiment above can be gained for both redundant and non-redundant codes in the

case of $| \, \Omega' \, | > | \, \Omega \, |$ ( because the freedom in selection is further extended ).

In the embodiment above, the code was selected on the criterion that each ALU of the new operation system depends on the least possible number of variables. However, the same merits as above can be attained even if this criterion is replaced with another one.

As expounded above, for an arbitrary original operation system operationally closed, this invention makes it possible to construct a new operation system at least superior to the original operation system with regard to an arbitrary criterion and to implement definite hardware because the mappings defined in this invention correspond directly to definite circuits.

INDUSTRIAL APPLICABILITY

This invention is very effective for price reduction of computers and the like by means of an increased operation speed and a reduced number of elements. Especially, it exhibits a more remarkable effect in a computing system of parallel operation type.

**Claims**

1. A high-speed operation system which, for one or more arbitrary defined operations ( binomial and monomial operations ) and for a computer or computing system to operate data (the data for the original operation algorithm ) belonging to an arbitrary finite set operationally closed regarding to these operations, produces the necessary operation result not by executing these operations directly through an ALU as in the original operation algorithm, but by converting the data once through an encoder into data for a new operation algorithm, executing a series of operations through an ALU for the new operation algorithm and changing the obtained result back into data for the original operation algorithm, and is configured to implement these operations with such an encoder and decoder and ALUs for the new operation algorithm that are determined by an encoding scheme which assures two-way conversion between data for the original algorithm and for the new algorithm and assures to produce the same operation result as the one obtained by the original operation algorithm.

*F I G.* 1

*F I G.* 2

F I G . 3

| A | X0 | X1 | X2 | X3 | X4 | X5 | X6 | X7 |
|---|----|----|----|----|----|----|----|----|
| X0 | X5 | X2 | X6 | X1 | X5 | X2 | X6 | X1 |
| X1 | X2 | X2 | X2 | X2 | X2 | X2 | X2 | X2 |
| X2 | X6 | X2 | X6 | X2 | X6 | X2 | X6 | X2 |
| X3 | X1 | X2 | X2 | X7 | X7 | X0 | X0 | X1 |
| X4 | X5 | X2 | X6 | X7 | X3 | X0 | X4 | X1 |
| X5 | X2 | X2 | X2 | X0 | X0 | X0 | X0 | X2 |
| X6 | X6 | X2 | X6 | X0 | X4 | X0 | X4 | X2 |
| X7 | X1 | X2 | X2 | X1 | X1 | X2 | X2 | X1 |

F I G . 4

| B | X0 | X1 | X2 | X3 | X4 | X5 | X6 | X7 |
|---|----|----|----|----|----|----|----|----|
| X0 | X1 | X1 | X1 | X5 | X5 | X5 | X5 | X1 |
| X1 | X1 | X0 | X2 | X3 | X5 | X4 | X6 | X7 |
| X2 | X1 | X2 | X2 | X5 | X5 | X6 | X6 | X1 |
| X3 | X5 | X3 | X5 | X7 | X1 | X7 | X1 | X3 |
| X4 | X5 | X5 | X5 | X1 | X1 | X1 | X1 | X5 |
| X5 | X5 | X4 | X6 | X7 | X1 | X0 | X2 | X3 |
| X6 | X5 | X6 | X6 | X1 | X1 | X2 | X2 | X5 |
| X7 | X1 | X7 | X1 | X3 | X5 | X3 | X5 | X0 |

$F I G. \; 5$

| X | C(X) |
|-----|------|
| $X_0$ | $X_0$ |
| $X_1$ | $X_6$ |
| $X_2$ | $X_4$ |
| $X_3$ | $X_1$ |
| $X_4$ | $X_7$ |
| $X_5$ | $X_5$ |
| $X_6$ | $X_3$ |
| $X_7$ | $X_2$ |

$F I G. \; 6$

F I G. 7

F I G. 8

13

*FIG.* 9

| [X0] = X7' |
|---|
| [X1] = X3' |
| [X2] = X0' |
| [X3] = X4' |
| [X4] = X1' |
| [X5] = X5' |
| [X6] = X2' |
| [X7] = X6' |

*FIG.* 11

| B' | X0' | X1' | X2' | X3' | X4' | X5' | X6' | X7' |
|---|---|---|---|---|---|---|---|---|
| X0' | X0' | X1' | X4' | X5' | X0' | X1' | X4' | X5' |
| X1' | X1' | X0' | X5' | X4' | X1' | X0' | X5' | X4' |
| X2' | X4' | X5' | X4' | X5' | X4' | X5' | X4' | X5' |
| X3' | X5' | X4' | X5' | X4' | X5' | X4' | X5' | X4' |
| X4' | X0' | X1' | X4' | X5' | X2' | X3' | X6' | X7' |
| X5' | X1' | X0' | X5' | X4' | X3' | X2' | X7' | X6' |
| X6' | X4' | X5' | X4' | X5' | X6' | X7' | X6' | X7' |
| X7' | X5' | X4' | X5' | X4' | X7' | X6' | X7' | X6' |

*FIG.* 10

| A' | X0' | X1' | X2' | X3' | X4' | X5' | X6' | X7' |
|---|---|---|---|---|---|---|---|---|
| X0' | X4' | X4' | X4' | X4' | X6' | X6' | X6' | X6' |
| X1' | X4' | X0' | X4' | X0' | X6' | X2' | X6' | X2' |
| X2' | X4' | X4' | X5' | X5' | X6' | X6' | X7' | X7' |
| X3' | X4' | X0' | X5' | X1' | X6' | X2' | X7' | X3' |
| X4' | X6' | X6' | X6' | X6' | X6' | X6' | X6' | X6' |
| X5' | X6' | X2' | X6' | X2' | X6' | X2' | X6' | X2' |
| X6' | X6' | X6' | X7' | X7' | X6' | X6' | X7' | X7' |
| X7' | X6' | X2' | X7' | X3' | X6' | X2' | X7' | X3' |

*FIG.* 12

| X' | C'(X) |
|---|---|
| X0' | X6' |
| X1' | X4' |
| X2' | X2' |
| X3' | X0' |
| X4' | X7' |
| X5' | X5' |
| X6' | X3' |
| X7' | X1' |

*F I G . 1 3*

| X | Φ(X) |
|---|---|
| $X_0$ | $X'_2$ |
| $X_1$ | $X'_4$ |
| $X_2$ | $X'_6$ |
| $X_3$ | $X'_1$ |
| $X_4$ | $X'_3$ |
| $X_5$ | $X'_5$ |
| $X_6$ | $X'_7$ |
| $X_7$ | $X'_0$ |

*F I G . 1 4*

| X' | Ψ(X) |
|---|---|
| $X'_0$ | $X_7$ |
| $X'_1$ | $X_3$ |
| $X'_2$ | $X_0$ |
| $X'_3$ | $X_4$ |
| $X'_4$ | $X_1$ |
| $X'_5$ | $X_5$ |
| $X'_6$ | $X_2$ |
| $X'_7$ | $X_6$ |

*F I G . 1 5*

*F I G . 1 6*

$FIG.\ 17$

$FIG.\ 18$

$FIG.\ 19$

*F I G.* 2 0

| gate | no. of elements | delay time |
|---|---|---|
| ⌐◁ NOT | □ | △ |
| 2-input AND | 2 □ | 2 △ |
| 2-input exclusive-OR | 4 □ | 3 △ |

*F I G.* 2 1

| circuit | | no. of elements | delay time |
|---|---|---|---|
| original | A | 4 1 □ | 1 2 △ |
| operation | B | 3 9 □ | 1 1 △ |
| system | C | 2 1 □ | 8 △ |
| new | A′ | 9 □ | 3 △ |
| | B′ | 1 0 □ | 3 △ |
| operation | C′ | 2 □ | △ |
| system | $\Phi$ | 1 1 □ | 5 △ |
| | $\Psi$ | 1 2 □ | 6 △ |

FIG. 22

FIG. 23

# INTERNATIONAL SEARCH REPORT

International Application No  PCT/JP90/01686

**I. CLASSIFICATION OF SUBJECT MATTER** (if several classification symbols apply, indicate all) [6]

According to International Patent Classification (IPC) or to both National Classification and IPC

Int. Cl[5]  G06F7/38

**II. FIELDS SEARCHED**

| Minimum Documentation Searched [7] | |
|---|---|
| Classification System | Classification Symbols |
| IPC | G06F7/38, G06F7/52, G06F7/556 |

Documentation Searched other than Minimum Documentation
to the Extent that such Documents are Included in the Fields Searched [8]

| | |
|---|---|
| Jitsuyo Shinan Koho | 1960 - 1990 |
| Kokai Jitsuyo Shinan Koho | 1971 - 1990 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| X | JP, A, 54-69039 (Hitachi Denshi, Ltd. and another), June 2, 1979 (02. 06. 79), (Family: none) | 1 |
| X | JP, A, 53-148234 (Fujitsu Ltd.), December 23, 1978 (23. 12. 78), (Family: none) | 1 |
| X | JP, A, 51-105245 (Nippon Gakki Seizo K.K.), September 17, 1976 (17. 09. 76), (Family: none) | 1 |
| X | JP, A, 55-47540 (Boeicho Gijutsu Kenkyu Honbucho and another), April 4, 1980 (04. 04. 80), (Family: none) | 1 |

| * Special categories of cited documents: [10] | |
|---|---|
| "A" document defining the general state of the art which is not considered to be of particular relevance | "T" later document published after the international filing date or priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

**IV. CERTIFICATION**

| Date of the Actual Completion of the International Search | Date of Mailing of this International Search Report |
|---|---|
| February 13, 1991 (13. 02. 91) | February 25, 1991 (25. 02. 91) |

| International Searching Authority | Signature of Authorized Officer |
|---|---|
| Japanese Patent Office | |

Form PCT/ISA/210 (second sheet) (January 1985)